# EUROPÄISCHE PATENTANMELDUNG

(11) **EP 4 667 320 A1**
(43) Veröffentlichungstag der Anmeldung: **24.12.2025**
(21) Anmeldenummer: 24183671.7
(22) Anmeldetag: 21.06.2024
(51) Int. Cl.: B62B 5/00, B60B 33/00, B62B 5/02

(54) **ROLLENSYSTEM MIT KABELABWEISER**

(71) Anmelder: STORZ MEDICAL AG, 8274 Tägerwilen (CH)
(72) Erfinder: MÜLLER, Peter, Sulgen (CH)
(74) Vertreter: Szynka Smorodin Patentanwälte Partnerschaft mbB

(57) **Zusammenfassung**

Die Erfindung betrifft ein Fahrgestell, insbesondere für ein Gerät mit Kabel, mit mindestens drei darunter angeordneten Rolleneinheiten, wobei mindestens eine der Rolleneinheiten einen an dem Fahrgestell angeordneten Rollenhalter, eine um eine Drehachse drehbar an dem Rollenhalter gelagerte Rollenanordnung und einen Abweiser umfasst, wobei der Abweiser mit dem Rollenhalter verbunden und in einer entlang der Drehachse gesehenen Seitenansicht der Rollenanordnung neben dieser angeordnet ist.

## Beschreibung

Die vorliegende Erfindung betrifft ein Fahrgestell, insbesondere für ein Gerät mit Kabel, mit mindestens drei darunter angeordneten Rolleneinheiten.

Rollen für Fahrgestelle sind in unterschiedlichsten Ausgestaltungen im Stand der Technik bekannt. Bspw. kommen Rollen in Geschäftsräumen oder im privaten Umfeld zum Einsatz, um einen Transport oder ein Manövrieren von schwereren Gegenständen wie bspw. einem Gerät zu erleichtern. Insbesondere in Arztpraxen und Kliniken werden für die Behandlung von Patienten oft Geräte mit einem erheblichen Gewicht (bspw. mehreren Kilogramm) an wechselnden Einsatzorten benötigt, was durch die Verwendung von Rollen an einem mit dem Gerät verbundenen, insbesondere darunter gelegenen Fahrgestell erleichtert wird.

Der vorliegenden Erfindung liegt die technische Aufgabe zugrunde, ein vorteilhaftes Fahrgestell, insbesondere für ein Gerät mit Kabel, anzugeben.

Erfindungsgemäß löst diese Aufgabe ein Fahrgestell nach Anspruch 1. Das Fahrgestell umfasst mindestens drei darunter angeordnete Rolleneinheiten, von denen zumindest eine Rolleneinheit einen in einer Seitenansicht neben einer Rollenanordnung angeordneten Abweiser umfasst. Wie nachstehend im Einzelnen erläutert wird, ist der Abweiser in besonderer Weise neben der Rollenanordnung angeordnet und ausgestaltet, um ein Einklemmen eines vor dem Abweiser liegenden beweglichen Objekts durch die Rollenanordnung zu verhindern. So kann ein unerwünschtes Einklemmen des beweglichen Objekts, bspw. eines Kabels, verhindert und infolgedessen bspw. ein abruptes Anhalten des Fahrgestells und/oder eine Beschädigung des Kabels vermieden werden. Hierbei wird, auch im Folgenden, ohne Beschränkung der Allgemeinheit, die zu befahrende Fläche als "unten" angenommen.

Bevorzugte Ausgestaltungen finden sich in den abhängigen Ansprüchen und der gesamten Offenbarung, wobei bei der Darstellung der Merkmale nicht immer im Einzelnen zwischen Vorrichtungs- und Verfahrens- bzw. Verwendungsaspekten unterschieden wird; implizit ist die Offenbarung hinsichtlich sämtlicher Anspruchskategorien zu lesen. Werden beispielsweise die Vorteile der Rolleneinheit für einen Zweck oder eine bestimmte Anwendung beschrieben, ist dies zugleich als Offenbarung einer entsprechenden Verwendung zu sehen.

Die in Anspruch 1 genannte Rolleneinheit umfasst ferner einen an dem Fahrgestell angeordneten Rollenhalter und eine um eine Drehachse drehbar an dem Rollenhalter gelagerte Rollenanordnung. In der entlang dieser Drehachse gesehenen Seitenansicht ist der Abweiser neben der Rollenanordnung angeordnet. Ganz allgemein beziehen sich hierbei Begriffe wie "Seitenansicht", "Vorderansicht" oder "Draufsicht" bzw. die entsprechenden Begriffe wie "seitlich", "vorne" oder "oben" auf einen am Fahrgestell montierten Betriebszustand, wobei der Betriebszustand hierbei ein auf einer horizontalen Fläche stehendes Fahrgestell mit mindestens drei darunterliegenden Rolleneinheiten meint.

Eine Bewegung des Fahrgestells wird hierbei durch die Rolleneinheiten ermöglicht, nämlich durch Drehen der bspw. aus einer oder auch einer Mehrzahl Rollenbestehenden Rollenanordnungen um ihre Drehachse. Infolge dieser Drehung bewegt sich die jeweilige Rolleneinheit in einer Fahrtrichtung, wobei (insbesondere im bevorzugten Fall einer schwenkbaren Anordnung der Rolleneinheiten am Fahrgestell) die Fahrtrichtungen der Rolleneinheiten auch voneinander unterschiedlich sein können. Die Rolle der Rolleneinheit kann dabei einstückig aus einem Material (bspw. Polypropylen) hergestellt sein, ist bevorzugt jedoch mehrstückig aus einem zylinderförmigen Grundkörper (bspw. Polypropylen) und einer an dessen Außenmantelfläche gebildeten ringförmigen Lauffläche (bspw. thermoplastischer Gummi) gebildet.

Unabhängig vom Material und der Anordnung der jeweiligen Rolleneinheit am Fahrgestell ist jedoch an mindestens einer der Rolleneinheiten der Abweiser derart neben, bevorzugt in der Fahrtrichtung vor, deren Rollenanordnung angeordnet, dass ein auf einer der Rollenanordnung abgewandten Seite des Abweisers, also an einer Vorderseite des Abweisers, liegendes bewegliches Objekt zunächst von diesem erfasst und infolgedessen ein Einklemmen des Objekts durch die Rolleneinheit vermieden wird. Vereinfacht gesagt "schiebt" die Vorderseite des Abweisers also das bewegliche Objekt (in der Fahrtrichtung gesehen) vor sich her oder seitlich weg. Insbesondere im Falle von auf einem Boden liegenden Strom- und/oder Datenkabeln oder Fluidleitungskabeln, wie diese häufig auch in Arztpraxen und Kliniken aufzufinden sind, wird also ein Einklemmen der Kabel durch den Abweiser verhindert.

Bei einer bevorzugten Ausgestaltung beträgt eine maximale Breite des Abweisers, parallel zur Drehachse der Rollenanordnung gemessen, mindestens 50 %, bevorzugt mindestens 75 %, 90% oder 95 % (mit möglichen, hiervon unabhängigen, Obergrenzen bei 150 %, 125 % oder 100 %), einer Breite der Rollenanordnung. Vereinfacht gesagt hat der Abweiser also eine gewisse Breite, beispielsweise mindestens 50 % der Breite der Rollenanordnung. Diese Mindestbreite ermöglicht es, insbesondere im Fall von länglichen und flexiblen Objekten wie Kabeln, diese zuverlässig vor der Rollenanordnung her- und an dieser vorbeizuführen. Insbesondere ein seitliches Einklemmen des Kabels, d.h. ein Einklemmen durch die an den Seitenflächen der Rollenanordnung gelegenen Zylinderkanten, wird hierdurch zuverlässig vermieden.

Bei einer weiteren bevorzugten Ausgestaltung beträgt eine zwischen einer dem Fahrgestell abgewandten Unterkante des Abweisers und einem Aufstandspunkt der Rollenanordnung in vertikaler Richtung gemessene lichte Höhe höchstens 12 %, bevorzugt höchstens 10 %, 8% oder 6%, eines Rollendurchmessers. Vereinfacht gesagt beträgt also ein vertikaler Abstand zwischen der Unterkante des Abweisers und dem Aufstandspunkt der Rollenanordnung höchstens 12 % des Rollendurchmessers. Unter dem Aufstandspunkt ist hierbei ein Berührungspunkt einer äußeren Mantelfläche der Rollenanordnung (im Betriebszustand) mit einer darunterliegenden Oberfläche zu verstehen, wobei dieser Aufstandspunkt auch in Form einer auf der Außenumfangsfläche gebildeten Linie (parallel zur Drehachse) verstanden werden kann. Vereinfacht lässt sich der Aufstandspunkt also als Kontaktbereich zwischen der Mantelfläche der Rollenanordnung und einer (im Betriebszustand) darunterliegenden Bodenoberfläche verstehen. Diese im Vergleich zum Rollendurchmesser relativ kleine lichte Höhe des Abweisers führt dazu, dass ausreichend dicke Kabel zuverlässig vom Abweiser erfasst werden, leicht zu überfahrende dünne Kabel oder beispielsweise etwaige am Boden vorhandene Unebenheiten wie Fußbodenübergänge oder Schwellenschutzleisten aber nicht von diesem erfasst werden.

Bei einer weiteren bevorzugten Ausgestaltung beträgt eine vertikale Höhe des Abweisers mindestens 80 %, bevorzugt mindestens 85 %, 90 % oder 95 %, (mit möglichen, hiervon unabhängigen Obergrenzen bei 150 %, 125 % oder 100 %) des Rollendurchmessers. Im Vergleich zum Rollendurchmesser erstreckt sich der Abweiser also über eine gewisse vertikale Höhe, wodurch auch vergleichsweise große Objekte vor diesem hergeschoben werden können. Zudem ist dieser bevorzugt an seinem oberen Ende an dem Rollenhalter befestigt, sodass durch die vertikale Ausdehnung ein Hebel gebildet wird.

Bei einer weiteren bevorzugten Ausgestaltung ist der Abweiser umgekehrt T-förmig, umfasst nämlich der Abweiser einen sich parallel zur Drehachse erstreckenden breiteren Abweisabschnitt und einen sich orthogonal hierzu zwischen dem Abweisabschnitt und dem Rollenhalter erstreckenden länglichen Federabschnitt. Die T-förmige Ausgestaltung des Abweisers mit Abweis- und Federabschnitt ermöglicht es, die erfindungsgemäß bevorzugte Breite im Bereich des Abweisabschnitts zu realisieren, und dennoch einen insgesamt schmalen und im Bereich des länglichen Federabschnitts biegbaren Abweiser zu erhalten. So kann eine gewisse Eigenelastizität erreicht werden, sodass etwaige vom Abweiser erfasste Hindernisse (beispielsweise Sockelleisten) nicht beschädigt werden. Außerdem eckt der schmale Federabschnitt beim Manövrieren wenig an.

Bevorzugt ist hierbei eine der Rollenanordnung abgewandte Vorderseite des Abweisabschnitts leicht, nach oben geneigt. In anderen Worten ausgedrückt ist die Vorderseite des Abweisabschnitts (in der Fahrtrichtung gesehen) gegenüber der Bodenoberfläche oben etwas nach hinten verkippt, ist nämlich eine Unterkante des Abweisabschnitts in horizontaler Richtung weiter von der Drehachse entfernt als darüberliegende Bereiche. Damit kann, wenn der Abweiser bei Auftreffen auf ein Objekt im Bereich seines Federabschnitts elastisch verformt wird, ein Einklemmen des beweglichen Objekts durch den Abweisabschnitt besser vermieden werden. Wenn der Abweisabschnitt durch die elastische Verformung des Federabschnitts zur Rollenanordnung hin bewegt wird, wird nämlich eine infolgedessen auftretende Verkippung durch den im Ausgangszustand vorhandenen Neigungswinkel der Vorderseite kompensiert. Die Vorderseite des Abweisabschnitts weist demnach auch im verformten Zustand des Federabschnitts nicht in Richtung der Bodenoberfläche, wodurch in Richtung der Bodenoberfläche auf das bewegliche Objekt wirkende Klemmkräfte, also eine Keilwirkung, vermieden werden kann.

Bei einer weiteren bevorzugten Ausgestaltung ist der Abweisabschnitt und/oder der Federabschnitt aus einem metallischen Werkstoff, insbesondere Federstahlblech, hergestellt. Bevorzugt weisen bzw. weist hierbei der Abweisabschnitt und/oder der Federabschnitt eine mittlere Wandstärke von höchstens 1,5 mm und/oder mindestens 0,5 mm auf. Die Herstellung des Abweisabschnitts und/oder des Federabschnitts aus Federstahlblech erhöht deren Eigenelastizität, insbesondere in Verbindung mit der vorgenannten mittleren Wandstärke.

Bei einer weiteren bevorzugten Ausgestaltung ist der Abweisabschnitt, eventuell mit Ausnahme seitlicher Enden, flach ausgebildet und optional sind die seitlichen Enden jeweils zu der Rollenanordnung hin konkav gekrümmt. Vereinfacht gesagt ist in der Draufsicht der Abweisabschnitt über einen Großteil seiner Breite gerade, kann jedoch im Bereich seiner seitlichen Enden zur Rollenanordnung hin gebogen sein. Diese bogenförmige Ausgestaltung der seitlichen Enden kann insbesondere beim Kontakt mit Hindernissen wie Sockelleisten deren Beschädigung weiter reduzieren.

Bei einer weiteren bevorzugten Ausgestaltung ist die Rollenanordnung aus einer ersten Rolle und einer zweiten Rolle gebildet, welche koaxial um die Drehachse drehbar an dem Rollenhalter angeordnet sind. Vereinfacht gesagt besteht die Rollenanordnung also aus zwei koaxial an dem Rollenhalter angeordneten Rollen, die bevorzugt über eine gemeinsame Achse mit diesem verbunden sind. Die Verwendung von zwei nebeneinanderliegenden Rollen trägt zu einem stabileren Stand und einer erhöhten Nutzlast der Rollenanordnung und somit auch des Fahrgestells bei.

Bei einer weiteren bevorzugten Ausgestaltung sind, parallel zur Drehachse gemessen, die erste Rolle und die zweite Rolle an ihren Außenumfangsflächen um einen Rollenabstand voneinander beabstandet und ist die Breite des länglichen Federabschnitts kleiner als der Rollenabstand. Hierdurch wird, wenn der Abweisabschnitt auf einen Gegenstand trifft, der längliche Federabschnitt verformt und kann infolgedessen in einen zwischen den beiden Rollen gebildeten Spalt eintreten, sodass insgesamt ein längerer Federweg des Abweisers erreicht wird.

Zudem kann, wenn bspw. die Rollen Laufflächen aus Gummi aufweisen, ein Kontakt zwischen Federabschnitt und der Gummi-Lauffläche (oder einer anderen stark reibenden Oberfläche) vermieden werden, was insbesondere die mechanische Beanspruchung der Laufflächen durch den Abweiser verringern und ein Blockieren der Rollen durch den Federabschnitt verhindern kann. Ferner kann, wenn die Grundkörper der Rollen und/oder der Rollenhalter aus einem gegenüber den Laufflächen härteren Material (z.B. Polypropylen) hergestellt sind, der Abweiser in dem Spalt mit diesem härteren Material in Kontakt kommen, wodurch eine mindestens geringere Bremswirkung erreicht wird.

Bei einer weiteren bevorzugten Ausgestaltung ist der Grundkörper um eine vertikale Schwenkachse schwenkbar mit dem Fahrgestell verbunden und schwenkt der Abweiser mit dem Grundkörper um die Schwenkachse. Vorzugsweise schneiden sich die Drehachse und die Schwenkachse dabei nicht und weiter vorzugsweise beträgt ein minimaler Abstand zwischen der Drehachse und der Schwenkachse mindestens 10 % des Rollendurchmessers. Der bevorzugte Abstand von mindestens 10 % des Rollendurchmessers zwischen Dreh- und Schwenkachse hat eine gewisse Exzentrizität der Rolleneinheit relativ zum Fahrgestell zur Folge, sodass sich bei einer Bewegung des Fahrgestells über eine gewisse Strecke selbstständig eine Vorwärts-Fahrtrichtung ergibt. In Verbindung mit der vorgenannten drehfesten Anordnung des Abweisers wird hierdurch erreicht, dass die Vorderseite der Rolleneinheit (mit davor gelegenem Abweiser) jeweils auf ein Hindernis zufährt; letzteres also zuverlässig vom Abweiser erfasst wird. Die bevorzugte Exzentrizität ist aber nicht zwangsläufig notwendig, da eine Vorwärts-Fahrtrichtung auch anderweitig definiert oder die erwünschte Anordnung des Abweisers in Fahrtrichtung vor der Rollenanordnung auch durch zwei Abweiser, beidseits neben der Rollenanordnung, erreicht werden kann.

Bei einer weiteren bevorzugten Ausgestaltung weist der Rollenhalter zur Verbindung mit dem Fahrgestell zumindest abschnittsweise einen Poylgonabschnitt, bspw. einen Außensechskantabschnitt, auf, welcher von einem Polygon-Gleitadapter (bspw. ein Innensechskant-Gleitadapter) umgriffen ist und bei welchem optional zwischen dem Polygon-Gleitadapter und dem Fahrgestell ein Abstandselement angeordnet ist. Die zusätzliche Verwendung des Polygon-Gleitadapters und optionalen Abstandselements ermöglicht eine einfache Montage, insbesondere Nachrüstung bestehender Fahrgestelle mit der erfindungsgemäßen Rolleneinheit.

Bei einer weiteren bevorzugten Ausgestaltung ist das Fahrgestell zum Tragen eines Objekts, insbesondere eines kabelgebundenen Medizingeräts und/oder eines Medizingeräts mit einem kabelgebundenen Handstück vorgesehen. Zum Beispiel ist das Fahrgestell Bestandteil eines Trolleys zur Aufnahme der genannten Objekte, wobei der Abweiser an die Durchmesser der Kabel des Medizingeräts angepasst ist.

Die Erfindung betriff ferner auch eine Verwendung der erfindungsgemäßen Rolleneinheit an einem Fahrgestell, einem technischen Gerät, einem medizinischen Gerät, einem Rollwagen, einem Rollstuhl, einem Bürostuhl, einem Arztstuhl oder einem Hocker.

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
Figur 1 eine schräge Seitenansicht einer Rolleneinheit für ein Fahrgestell;
Figur 2 eine schräge Seitenansicht eines Abstandhalters;
Figur 3 eine Vorderansicht der Rolleneinheit;
Figur 4 einen Schnittansicht durch einen Anbindabschnitt der Rolleneinheit.

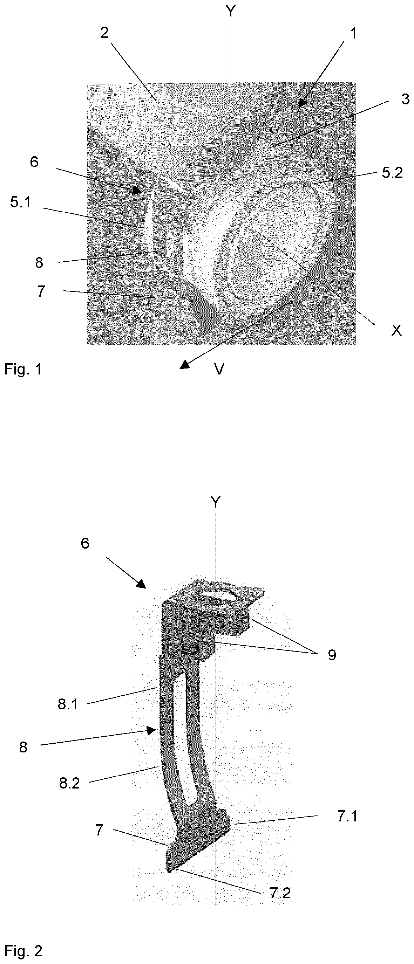

**Figur 1** zeigt einen Teil eines Fahrgestells 2 mit einer darunter angeordneten Rolleneinheit 1. Die Rolleneinheit 1 umfasst einen Rollenhalter 3, eine um eine horizontale Drehachse X drehbar an dem Rollenhalter 3 gelagerte Rollenanordnung 5 und einen Abweiser 6. Im gezeigten Beispiel besteht die Rollenanordnung 5 aus zwei koaxial um die Drehachse X gelagerten Rollen, nämlich einer ersten Rolle 5.1 und einer zweiten Rolle 5.2. Die Rolleneinheit 1 ist um eine vertikale Schwenkachse Y schwenkbar mit dem Fahrgestell 2 verbunden.

Die Drehachse X und Y schneiden sich nicht, sondern sind in vertikaler Richtung um einen horizontalen Abstand, im gezeigten Beispiel 2 cm, beabstandet. Eine hieraus resultierende "Exzentrizität" der Rolleneinheit 1 hat zur Folge, dass sich die Rolleneinheit 1 bei einer Bewegung des Fahrgestells 2 relativ zu der Bewegung ausrichtet. Demnach bewegt sich durch eine Drehung der beiden Rollen 5.1, 5.2 um die Drehachse X die Rolleneinheit 1 in einer Fahrtrichtung V, wobei (durch die Exzentrizität) diese mit einer Vorderseite in Richtung der Fahrtrichtung V blickt. In einer entlang der Drehachse X gesehenen Seitenansicht der Rollenanordnung 5 ist der Abweiser 6 neben dieser angeordnet, nämlich im gezeigten Beispiel (in der Fahrtrichtung V) vor der Rollenanordnung 5.

**Figur 2** zeigt eine perspektivische Ansicht des Abweisers 6. Der Abweiser 6 ist im Wesentlichen umgekehrt T-förmig ausgestaltet, weist nämlich einen sich horizontal (d.h. parallel zur Drehachse X) erstreckenden Abweisabschnitt 7 und einen sich ungefähr vertikal erstreckenden länglichen Federabschnitt 8 auf, welcher an einer Oberseite mit dem Rollenhalter 3 zu verbinden ist. In Figur 2 ist zudem zu erkennen, dass der Federabschnitt 8 an seinem oberen Ende zwei Biegelaschen 9 aufweist, die den Rollenhalter 3 seitlich umgreifen und im gezeigten Beispiel jeweils eine horizontale Länge von 20 mm aufweisen. Sie dienen der Verdrehsicherung.

An einem unteren Ende des Abweisers 6, nämlich im Bereich des Abweisabschnitts 7, ist dieser mit Ausnahme seitlicher Enden 7.1,7.2 flach. Die seitlichen Enden 7.1,7.2 sind jeweils zu der Rollenanordnung 5 hin konkav gekrümmt, nämlich um 2,1 mm gegenüber der Vorderseite der Abweisabschnitts 7 nach hinten umgebogen. Der Abweisabschnitt 7 wird über den Federabschnitt 8 mit dem Rollenhalter 3 verbunden; zur Erhöhung seiner Elastizität ist letzterer zudem mit einer länglichen Ausnehmung versehen, welche eine (horizontale) Breite von 10 mm und eine (vertikale) Höhe von 60 mm aufweist.

Zudem ist in Figur 2 zu erkennen, dass der Federabschnitt 8 einen im Wesentlichen gerade verlaufenden oberen Abschnitt 8.1, welcher im gezeigten Beispiel eine vertikale Höhe von 47 mm aufweist, und einen (leicht nach rechts) in der Seitenansicht bogenförmigen Abschnitt 8.2 umfasst, wobei der bogenförmige Abschnitt im gezeigten Beispiel einen Radius von 80 mm aufweist. Der Abweisabschnitt 7 ist demgegenüber leicht nach links verkippt, vgl. auch Figur 1.

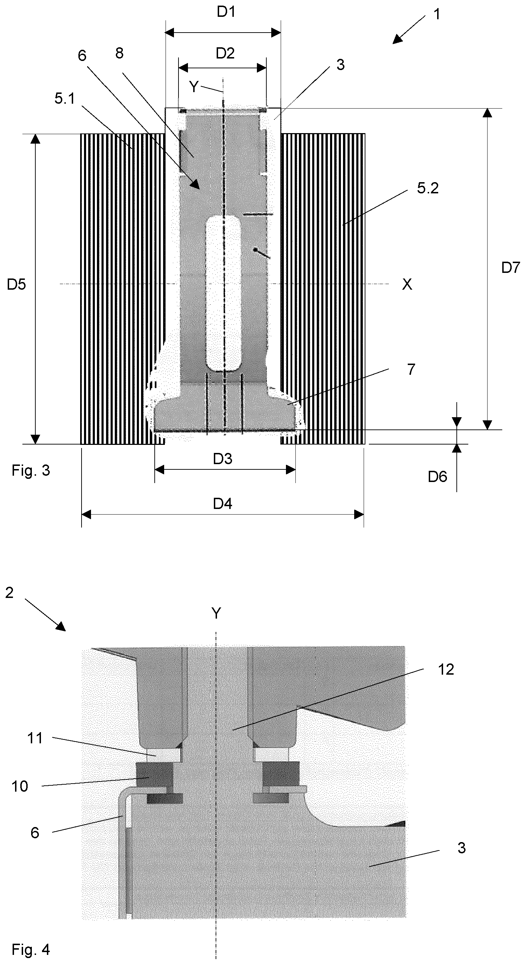

**Figur 3** zeigt eine schematische Vorderansicht der Rolleneinheit 1 aus Figur 1 mit dem davor angeordnetem Abweiser 6. Die Rollenanordnung 5 besteht im gezeigten Beispiel aus der ersten Rolle 5.1 und der zweiten Rolle 5.2, die um einen Rollenabstand D1 voneinander beabstandet sind. Der Abweiser 6 weist im Bereich seines Federabschnitts 8 eine Breite D2 auf (im gezeigten Beispiel 25 mm), welche kleiner als der Rollenabstand D1 ist. An seinem unteren Ende, nämlich im Bereich des Abweisabschnitts 7, weist der Abweiser 6 seine maximale Breite D3 auf, welche im gezeigten Beispiel 50 % einer Breite D4 der Rollenanordnung 5 beträgt und 40 mm misst. Die Ausgestaltung ermöglicht, dass der längliche Federabschnitt 8 bei einem Auftreffen des Abweisabschnitts 7 auf einen Gegenstand (nicht dargestellt) in den zwischen der ersten Rolle 5.1 und der zweiten Rolle 5.2 gebildeten Zwischenraum tritt. Dort stößt er an den Rollenhalter 3, bevor der Abweisabschnitt 7 gegen die Laufflächen der Rollen 5.1 und 5.2 stoßen kann. Außerdem eckt der relativ schmale Federabschnitt beim Manövrieren wenig oder nicht an.

In Figur 3 ist zudem zu erkennen, dass der Abweiser 6 insgesamt länglich ausgebildet ist; sich nämlich über eine vertikale Höhe D7 erstreckt, welche im gezeigten Beispiel etwa 95 % eines Rollendurchmessers D5 beträgt und 91 mm misst. Zudem ist in Figur 3 zu erkennen, dass eine lichte Höhe D6, nämlich ein in vertikaler Richtung gemessener Abstand zwischen einer Unterkante des Abweisers 6 und einem Aufstandspunkt der Rollenanordnung, 5 % des Rollendurchmessers D5 beträgt.

**Figur 4** zeigt einen seitlichen Querschnitt durch einen oberen Bereich des Rollenhalters 3, nämlich dessen Anbindung mittels eines Gewindestifts 12 an das Fahrgestell 2. In Figur 4 ist eine nachrüstbare Lösung gezeigt, mittels welchem der Abweiser 6 an herkömmlichen Rollenanordnungen (beispielsweise an einem Trolley für ein technisches oder ein medizinisches Gerät, einem Rollwagen, einem Rollstuhl, einem Bürostuhl, einem Arztstuhl oder einem Hocker) angeordnet werden kann. Dazu dienen ein Innensechskant-Adapter 10 und optional ein Abstandselement 11.

## Patentansprüche

1. Fahrgestell (2), insbesondere für ein Gerät mit Kabel, mit mindestens drei darunter angeordneten Rolleneinheiten (1),
wobei mindestens eine der Rolleneinheiten (1) einen an dem Fahrgestell (2) angeordneten Rollenhalter (3), eine um eine Drehachse (X) drehbar an dem Rollenhalter (3) gelagerte Rollenanordnung (5) und einen Abweiser (6) umfasst, wobei der Abweiser (6) mit dem Rollenhalter (3) verbunden und entlang der Drehachse (X) gesehen neben der Rollenanordnung (5) angeordnet ist.

2. Fahrgestell (2) nach Anspruch 1, bei welchem, parallel zur Drehachse (X) gemessen, eine maximale Breite (D3) des Abweisers (6) mindestens 50 % einer Breite (D4) der Rollenanordnung (5) beträgt.

3. Fahrgestell (2) nach Anspruch 1 oder 2, bei welchem eine zwischen einer dem Fahrgestell (2) abgewandten Unterkante des Abweisers (6) und einem Aufstandspunkt der Rollenanordnung (5) gemessene lichte Höhe (D6) höchstens 12 % eines Rollendurchmessers (D5) beträgt.

4. Fahrgestell (2) nach einem der Ansprüche 1 bis 3, bei welchem eine vertikale Höhe (D7) des Abweisers (6) mindestens 80 % eines Rollendurchmessers (D5) beträgt.

5. Fahrgestell (2) nach einem der Ansprüche 1 bis 4, bei welchem der Abweiser (6) umgekehrt T-förmig ist, nämlich einen sich parallel zur Drehachse (X) erstreckenden Abweisabschnitt (7) und einen sich orthogonal hierzu zwischen dem Abweisabschnitt (7) und dem Rollenhalter (3) erstreckenden länglichen Federabschnitt (8) umfasst.

6. Fahrgestell (2) nach Anspruch 5, bei welchem der Abweisabschnitt (7) und/oder der Federabschnitt (8) aus einem metallischen Werkstoff, insbesondere Federstahlblech, hergestellt ist.

7. Fahrgestell (2) nach Anspruch 6, wobei der Abweisabschnitt (7) und/oder der Federabschnitt (8) eine mittlere Wandstärke von höchstens 1,5 mm und/oder mindestens 0,5 mm aufweist.

8. Fahrgestell (2) nach einem der Ansprüche 5 bis 7, wobei der Abweisabschnitt (7) mit Ausnahme seitlicher Enden (7.1, 7.2) flach ausgebildet ist, und wobei die seitlichen Enden (7.1, 7.2) jeweils zu der Rollenanordnung (5) hin konkav gekrümmt sind.

9. Fahrgestell (2) nach einem der Ansprüche 1 bis 8, bei welchem die Rollenanordnung (5) aus einer ersten Rolle (5.1) und einer zweiten Rolle (5.2) gebildet ist, welche koaxial um die Drehachse (X) drehbar an dem Rollenhalter (3) angeordnet sind.

10. Fahrgestell (2) nach Anspruch 9, wobei, parallel zur Drehachse (X) gemessen, die erste Rolle (5.1) und die zweite Rolle (5.2) an ihren Außenumfangsflächen um einen Rollenabstand (D1) voneinander beabstandet sind, und wobei eine mittlere Breite (D2) des länglichen Federabschnitts (8) kleiner als der Rollenabstand (D1) ist.

11. Fahrgestell (2) nach einem der Ansprüche 1 bis 10, bei welchem der Grundkörper (3) um eine Schwenkachse (Y) schwenkbar mit dem Fahrgestell (2) verbunden ist, wobei der Abweiser (6) mit dem Grundkörper (3) um die Schwenkachse (Y) schwenkt.

12. Fahrgestell (2) nach Anspruch 11, bei welchem die Drehachse (X) und die Schwenkachse (Y) sich nicht schneiden, wobei ein minimaler Abstand zwischen der Drehachse (X) und der Schwenkachse (Y) mindestens 10% eines Rollendurchmessers (D5) beträgt.

13. Fahrgestell (2) nach einem der Ansprüche 1 bis 12, bei welchem der Rollenhalter (3) zumindest abschnittsweise einen Poylgonabschnitt aufweist, welcher von einem Polygon-Gleitadapter (10) umgriffen ist, und bei welchem optional zwischen dem Polygon-Gleitadapter (10) und dem Fahrgestell (2) ein Abstandselement (11) angeordnet ist.

14. Gerät mit einem Fahrgestell (2) nach einem der Ansprüche 1 bis 13, welches Gerät ein technisches Gerät, insbesondere ein Medizingerät mit einem Kabel ist.

15. Verwendung einer Rolleneinheit (1) mit einem Rollenhalter (3), einer um eine Drehachse (X) drehbar an dem Rollenhalter (3) gelagerten Rollenanordnung (5) und einem Abweiser (6), wobei der Abweiser (6) mit dem Rollenhalter (3) verbunden oder verbindbar ist und im verbundenen Zustand entlang der Drehachse (X) gesehen neben der Rollenanordnung (5) angeordnet ist,
für ein Fahrgestell nach einem der Ansprüche 1 bis 13 oder für ein Gerät nach Anspruch 14.
